# EUROPÄISCHE PATENTSCHRIFT

(11) **EP 0 934 666 B1**
(45) Veröffentlichungstag und Bekanntmachung des Hinweises auf die Patenterteilung: **22.06.2005**
(21) Anmeldenummer: 97949855.7
(22) Anmeldetag: 28.10.1997
(51) Int. Cl.: H04Q 7/24, H04Q 7/38, H04Q 3/00, H04M 3/42

(54) **VERFAHREN UND TELEFONNETZ ZUR VERMITTLUNG VON TELEFONVERBINDUNGEN**
METHOD AND TELEPHONE NETWORK FOR SWITCHING TELEPHONE CONNECTIONS
PROCEDE ET RESEAU TELEPHONIQUE POUR TRANSFERER DES COMMUNICATIONS TELEPHONIQUES

(30) Priorität: 28.10.1996 DE 19644792
(43) Veröffentlichungstag der Anmeldung: 11.08.1999
(73) Patentinhaber: SIEMENS AKTIENGESELLSCHAFT, 80333 München (DE)
(72) Erfinder: DZUBAN, Stanislav, A-1020 Wien (AT)
(86) Internationale Anmeldenummer: PCT/DE1997/002504
(87) Internationale Veröffentlichungsnummer: WO 1998/019484

(56) Entgegenhaltungen:
- CA-A- 2 160 278
- REGNIER J ET AL: "PERSONAL COMMUNICATION SERVICES-THE NEW POTS" GLOBECOM '90: IEEE GLOBAL TELECOMMUNICATIONS CONFERENCE & EXHIBITION. "COMMUNICATIONS: CONNECTING THE FUTURE", SAN DIEGO, CA, US, DEC. 2- 5, 1990, Bd. 1, Seiten 420-426, XP000218765
- BRAY M: "IMPACT OF NEW SERVICES ON SCP PERFORMANCE" IEEE INTERNATIONAL CONFERENCE ON COMMUNICATIONS ICC '90; INCLUDING SUPERCOMM TECHNICAL SESSIONS. ATLANTA, GA, US, APR. 15 - 19, 1990, Bd. 1, Seiten 241-247, XP000147409

## Beschreibung

Die Erfindung bezieht sich auf ein Verfahren und ein Telefonnetz gemäß dem Oberbegriff des Patentanspruchs 1 bzw. des Patentanspruchs 12.

Die modernen Telekommunkationsdienste bzw. Netzwerkbetreiber bieten ihren Kunden immer mehr Zusatzdienste an, die intelligent verwaltet werden. Eine Information, die in vielen Fällen für solche Zusatzdienste von Bedeutung ist, sind die geographischen Koordinaten eines Teilnehmers. Bei einer Anzahl wichtiger Dienstleistungen, wie sie z.B. von Taxis, Einsatzwagen, Installateuren, etc. erbracht werden, ist es notwendig oder zumindest vorteilhaft, den Aufenthaltsort des Teilnehmers zu kennen. Während beispielsweise im Mobilfunk, hier insbesondere im GSM-Netz die geographischen Koordinaten der Teilnehmer bereits eine wesentliche Informationsquelle darstellen, wurde diese Information in einem Festnetz bisher nicht in verwendbarer Weise zur Verfügung gestellt. Dies liegt daran, daß sich in den üblicherweise verwendeten Numerierungssystemen aus der Rufnummer eines Teilnehmers nur eine grobe geographische Position, z.B. ein Bezirk, ableiten läßt. Da aber die Entwicklung dahingehend verläuft, daß eine Rufnummer nicht mehr einem bestimmten Anschluß bzw. Telefonapparat, der sich immer an einen bestimmten Ort befindet, zugeordnet sein soll, sondern dem Kunden als Person, geht auch der bisherige, ohnedies nur beschränkte Informationsgehalt der Rufnummer hinsichtlich der geographischen Lage verloren.

Dazu kommt, daß die Tendenz vorliegt, zwar bei Mobiltelefonen, z.B. des GSM-Systems, viel intelligente Hard- und Software in das Endgerät zu packen, bei Geräten von Festnetzen einschließlich Schnurlostelefonsysteme, z.B. des DECT-Systems, dagegen die Komplexität in den Endgeräten gering zu halten, dafür den Hauptteil an Intelligenz in das Netz zu integrieren.

Um schneller kundenspezifische Dienste anbieten zu können, verwendet man Dienstesteuerungen (service control points), die zentralisiert oder dezentralisiert sein können und beispielsweise in der folgenden Empfehlung der International Telecommunication Union beschrieben sind: ITU-T Recommendation Q.1215 (03/93), General recommendations on telephone switching and signalling, Intelligent Network, "Physical Plane for Intelligent Network CS-1", pages 1-8.

Aus der CA-A-2 160 278.- zu der die korrespondierende Patentschrift US-A-5 727 057 gehört - ist ein Verfahren zur Speicherung, Übertragung und Kommunikation von geographischen Positionsdaten, die von einem GPS-Satellitennavigationssystem (Global Positioning System) geliefert werden, in einem Telefonnetz bekannt. Dabei weist das Telefonnetz ein Vermittlungssystem auf, das zur Vermittlung der Telefonverbindungen abhängig von der Art des Telefonnetzes - beispielsweise als Zentralamt (central office) für ein öffentliches Telefonnetz (PSTN) oder als Dienstesteuerung (SCP) für ein Intelligentes Netz (IN)- ausgebildet ist. Mehrere Datenbanken sind von dem Vermittlungssystem abgesetzt angeordnet, um individuelle Teilnehmerdaten, Leitweginformationen und sonstige Daten zu speichern. Zu den sonstigen Daten gehören auch die GPS-Positionsdaten, die die geographische Lage der Teilnehmerendgeräte angeben und als Ortsinformationen (location ID) wirken. Den Teilnehmerendgeräten sind Telephonnummern (telephone ID) gemäß einem statischen Numerierungsplan des Telefonnetzes eindeutig zugeordnet. Es lassen sich Dienste für verschiedene Teilnehmer - beispielsweise mobile Teilnehmer eines zellularen Mobilfunknetzes und stationäre Teilnehmer eines drahtgebundenen Telefonnetzes - nutzen, indem Abfragen der Datenbanken auf der Basis entweder der Ortsinformation oder der Telephonnummer oder einer Kombination beider Identitäten erfolgen.

Es ist Aufgabe der Erfindung, ein Verfahren und ein Telefonnetz anzugeben, das eine verbesserte Steuerung der Vermittlung von Telefonverbindungen ermöglicht.

Diese Aufgabe wird erfindungsgemäß durch die Merkmale des Patentanspruchs 1 hinsichtlich des Verfahrens und durch die Merkmale des Patentanspruchs 12 hinsichtlich des Telefonnetzes gelöst. Weiterbildungen der Erfindung sind in den Unteransprüchen angegeben.

Ausgehend von der Speicherung von Teilnehmerdaten in einem Amt, dem eine Dienstesteuerung zugeordnet ist, werden gemäß dem Gegenstand der Erfindung in einem zusätzlich zu einem Teilnehmer-Datenregister angeordneten Koordinatenregister im jeweiligen Amt geographische Koordinaten für jeden der vom Amt bedienten Teilnehmeranschlüsse gespeichert, die geographischen Koordinaten bei jeder abgehenden und ankommenden Verbindung im Amt abgerufen und zusammen mit zumindest den Teilnehmerdaten der Dienstesteuerung zur Verfügung gestellt, und in Abhängigkeit der von der Dienstesteuerung empfangenen geographischen Koordinaten der weitere Verbindungsablauf hinsichtlich der Vermittlung der Verbindung gesteuert.

Da die Erfindung die Einführung eines zusätzlichen Koordinatensystems in den jeweiligen Ämtern vorsieht, braucht es lediglich einer Anpassung der Signalisierungssysteme zur Übertragung der geographischen Koordinaten, nicht jedoch zusätzlicher Hard- oder Software bei den Teilnehmereinrichtungen. Der aus der Erfindung resultierende zusätzliche Nutzen ist damit allen Teilnehmern ohne zusätzlichen Aufwand zugänglich. Gerade durch das Integrieren eines zusätzlichen Koordinatenregisters in das jeweilige Amt wird das Koordinatensystem amtsseitig und nicht geräteseitig geschaffen. Die kompakte und interne Anordnung von einem Koordinatenregister zusätzlich zum Teilnehmerdatenregister im jeweiligen Amt bewirkt einen nur durch interne Kommunikation sich ergebenden geringen Signalisierungsåufwand, beispielsweise durch automatisches Hinzufügen eines Koordinatensignals zu dem üblichen Rufsignal.

Es ist gemäß einer Weiterbildung der Erfindung von Vorteil, wenn die geographischen Koordinaten mit geographischen Vergleichskoordinaten verglichen werden, die von der Dienstesteuerung in Listen abgespeichert werden. Gemäß einer bevorzugten Ausgestaltung werden in Abhängigkeit von dem Ergebnis des Vergleichs modifizierte Wähldaten von der Dienstesteuerung an das Amt geleitet.

Gemäß einer anderen Weiterbildung der Erfindung können die Teilnehmer mobile Teilnehmer sein, deren aktuelle geographische Koordinaten der Dienstesteuerung zur Verfügung gestellt werden. Alternativ dazu können die Teilnehmer Benutzer von Schnurlostelefonen in Zellen eines Schnurlossystems sein, deren geographische Koordinaten der Dienstesteuerung zur Verfügung gestellt werden.

Weiters ist es zweckmäßig, wenn von der Dienstesteuerung in Abhängigkeit der geographischen Koordinaten Verbindungen zugelassen oder ausgeschlossen werden. Die geographischen Koordinaten lassen sich vorteilhafterweise an ein Zielamt oder ein Transitamt und/oder an ein Ursprungsamt weiterleiten.

Es hat sich ebenfalls als günstig erwiesen, wenn in Abhängigkeit von den geographischen Koordinaten eine gespeicherte Ansage vor dem Verbindungsaufbau oder statt dem Herstellen der Verbindung wiedergegeben oder eine Rufweiterleitung durchgeführt wird. Darüberhinaus können in Abhängigkeit von den geographischen Koordinaten auch ein oder mehrere vermittlungstechnische Ereignisse des Verbindungsaufbaus für die Dienstesteuerung aktiviert oder der Teilnehmer mit einem Operator verbunden werden.

Die Erfindung samt anderer Vorteile ist im folgenden an Hand beispielsweiser Ausführungsformen näher erläutert, die in der Zeichnung veranschaulicht sind. In dieser zeigen Fig. 1 und 2 schematisch den Verbindungsablauf in einem Netz mit einem Ursprungsamt, einem Zielamt und einer intelligenten Dienstesteuerung, Fig. 3 in einem Diagramm weitere Möglichkeiten des Verbindungs- und Signalablaufs in einem Telefonnetz nach der Erfindung und Fig. 4 in einem Schema die Vermittlung von einem Festteilnehmer zu einem mobilen Teilnehmer; der seinerseits seine Koordinaten bekanntgibt.

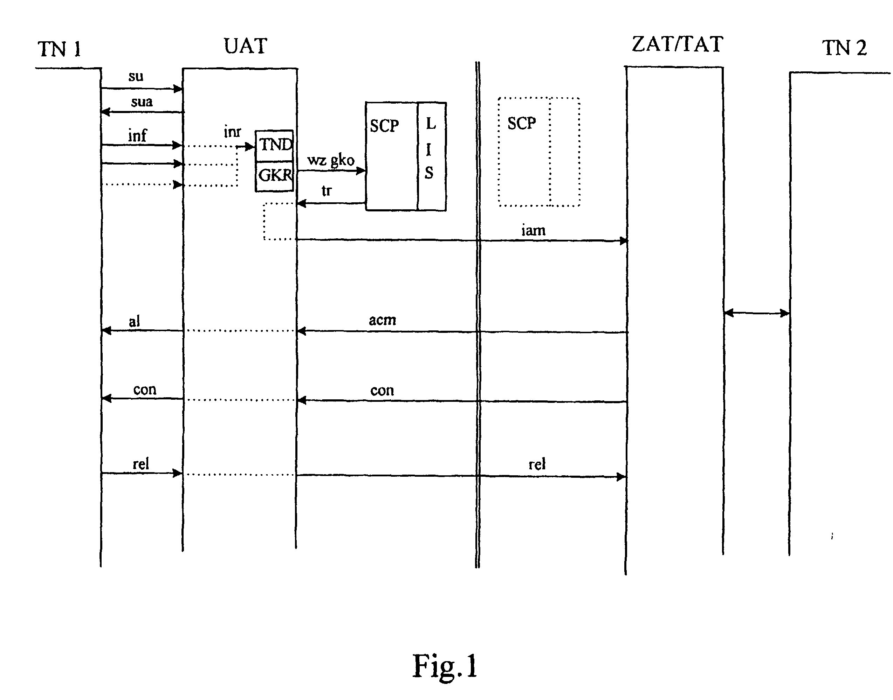

Fig. 1 zeigt ein Ursprungsamt UAT sowie ein Zielamt ZAT/TAT, das auch ein Transitamt sein kann. Im folgenden wird üblicherweise nur von "Ursprungsamt" oder "Zielamt" gesprochen, doch soll klar sein, daß damit auch immer ein Transitamt gemeint sein kann. Ein erster Teilnehmer TN1 gehört in dem Telefonnetz zu dem Ursprungsamt UAT, wogegen ein zweiter Teilnehmer TN2 zu dem Zielamt ZAT gehört. Dem Ursprungsamt UAT ist eine intelligente Dienstesteuerung SCP zugeordnet, wobei diese im Ursprungsamt oder zentralisiert gelegen sein kann. Dem Zielamt ZAT kann gleichfalls eine, in Fig. 1 nur strichliert gezeichnete intelligente Dienstesteuerung SCP zugeordnet sein. Derartige Dienstesteuerungen, oft auch als "intelligentes Netzwerk" bezeichnet, sind bekannt und sie enthalten die erforderliche Hard- bzw. Software, um Gespräche "intelligent" verwalten bzw. vermitteln zu können.

In dem Ursprungsamt befindet sich ein Teilnehmerdaten-Register TND und, für die Erfindung wesentlich, ein Koordinatenregister GKR. In dem Teilnehmerdaten-Register TND sind wichtige, die verschiedenen Teilnehmer des Amtes UAT betreffende Daten gespeichert, welche sich auf Zugangsmöglichkeiten, Berechtigungen der Teilnehmer etc. beziehen, und in dem Koordinatenregister GKR sind die geographischen Koordinaten jedes Teilnehmeranschlusses gespeichert. Es wird hier zweckmäßigerweise ein auch mit anderen Netzen, insbesondere Mobilfunknetzen kompatibles bzw. gleiches Format gewählt, wozu beispielsweise auf die bereits eingangs erwähnte Literaturstelle Draft GSM 03.32 verwiesen wird, welche die geographische Lagebeschreibung im GSM-System betrifft.

In Fig. 1 sind einerseits räumlich (links/rechts) und andererseits zeitlich (von oben nach unten) die Abläufe bei dem erfindungsgemäßen Verfahren bzw. in einem erfindungsgemäßen Telefonnetz beschrieben. Von dem Teilnehmer TN1 gelangt ein Aufbausignal su an das Amt UAT, welches dann ein Aufbau-Quittierungssignal sua an den Teilnehmer zurückgibt. Nun gelangen die Informationssignale inf, insbesondere die Wählziffern an das Amt UAT, das daraufhin ein Informationsabfragesignal inr an das Teilnehmerdatenregister TND sendet. Aus dem Koordinatenregister GKR werden nun zu der einlangenden Information die geographischen Koordinaten hinzugefügt und ein Wählziffern- und Koordinatensignal wz, gko wird an die intelligente Dienstesteuerung SCP gesendet. Die Dienstesteuerung SCP gibt nun in Abhängigkeit von den ihr übermittelten geographischen Koordinaten aus dem Koordinatenregister GKR ein Signal tr, welches die übersetzten Daten enthält, an das Ursprungsamt UAT weiter. Verschiedene Kriterien, welche in der intelligenten Dienstesteuerung SCP hierbei berücksichtigt werden, sind unten noch näher angeführt. Beispielsweise kann die Dienstesteuerung SCP eine Liste LIS enthalten, in der Vergleichskoordinaten abgespeichert sind, die für weitere Entscheidungen maßgeblich sind. Nach Erhalt des Signales tr gibt dann das Ursprungsamt UAT ein Anfangs-Adreßsignal iam an das Zielamt ZAT weiter. Nach vollständigem Erhalt der Information des Signals iam bestätigt das Zielamt ZAT mit einem "Adresse komplett"-Signal acm an das Ursprungsamt UAT, welches sodann ein Läutesignal al an den Teilnehmer TN1 gibt. Als nächstes folgt dann ein Durchschaltesignal con von dem Zielamt ZAT über das Ursprungsamt UAT an den Teilnehmer TN1. Der Verbindungsaufbau wird schließlich durch ein Auslösesignal rel seitens des Teilnehmers 1 über das Ursprungsamt UAT an das Zielamt ZAT beendet.

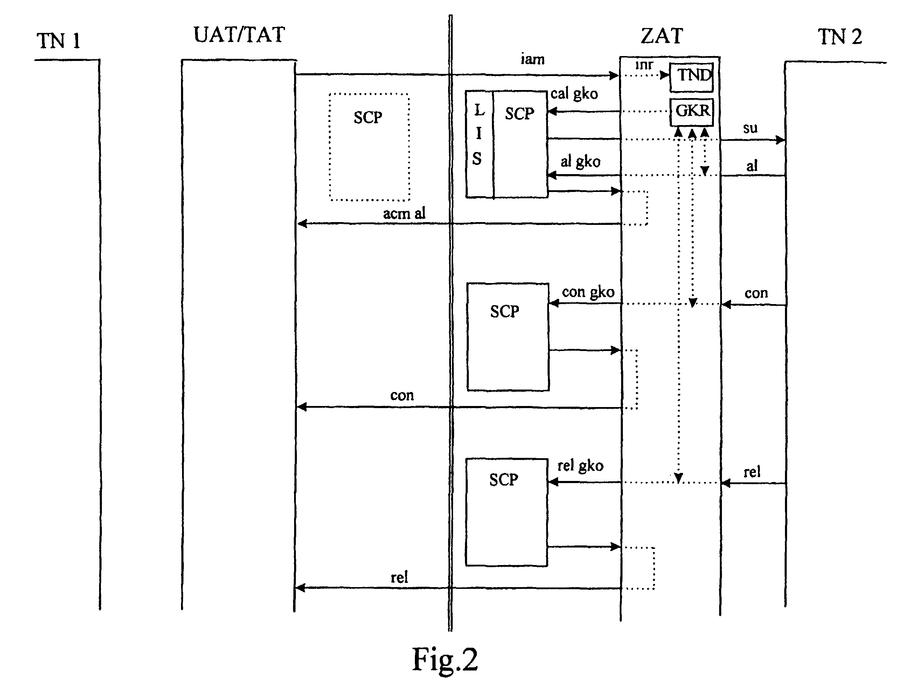

In Fig. 2 ist die Grundfunktion des Verfahrens und des Netzes nach der Erfindung detaillierter für im Zielamt ZAT ankommende Verbindungen erläutert. Eine solche Verbindung beginnt mit dem Anfangs-Adreßsignal iam, welches von dem Amt UAT an das Zielamt ZAT gelangt. Dort wird in der Folge mit einem Informationsabfragesignal inr das Teilnehmerdaten-Register TND abgefragt, wobei die Teilnehmerdaten zum Beispiel auf Zugangsmöglichkeiten, Berechtigung des Teilnehmers usw. überprüft werden. Gleichzeitig werden die in dem dem Register TND zugeordneten Koordinatenregister GKR gespeicherten geographischen Koordinaten des Teilnehmers TN2 der vorliegenden Information hinzugefügt und zur weiteren Verarbeitung bereitgestellt. Von den Registern TND und GKR gelangt ein Ruf- und Koordinatensignal cal,gko an eine intelligente Dienstesteuerung SCP. Auch in diesem Fall steuert die intelligente Dienstesteuerung SCP den weiteren Ablauf der Verbindung in Abhängigkeit von den geographischen Koordinaten, hier des gerufenen Teilnehmers TN2. Beispielsweise wäre es möglich, daß der Benützer eines DECT-Schnurlostelefons in gewissen Funkzellen des DECT-Systems nicht erreichbar sein möchte und eine entsprechende Information der Dienstesteuerung vorliegt. In diesem Fall liegen dann die geographischen Koordinaten jener Zellen vor, die von einer Verbindung ausgeschlossen werden bzw. jene, bei welchen eine Verbindung zugelassen sein soll.

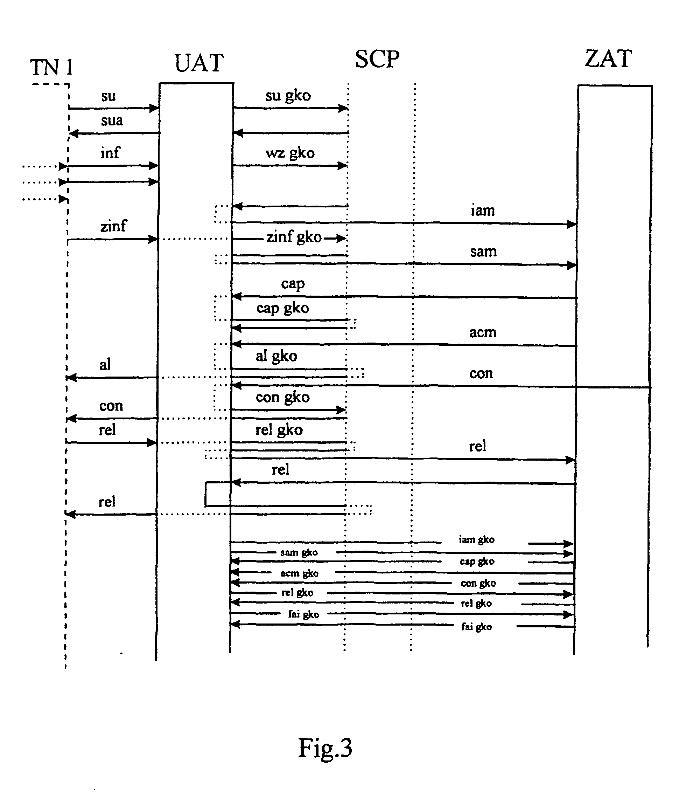

Im weiteren Verlauf gelangt sodann ein Aufbausignal su von der Dienstesteuerung SCP über das Amt ZAT an den Teilnehmer. Auch ein Läutesignal al des Teilnehmers TN2 kann in dem Zielamt ZAT mit geographischen Koordinaten versehen werden, als Läute- und Koordinatensignal al, gko in der Dienstesteuerung SCP bearbeitet werden und sodann als "Adresse komplett"-Läutesignal acm, al an das Ursprungsamt gelangen. Gleiches gilt sinngemäß für ein Durchschaltesignal con, das vom zweiten Teilnehmer TN2 in dem Zielamt ZAT mit geographischen Koordinaten ergänzt wird, wobei dann dieses kombinierte Signal con, gko in der Dienstesteuerung SCP verarbeitet wird. Diese veranlaßt dann, daß von dem Zielamt ZAT ein Durchschaltesignal con an das Ursprungsamt UAT gelangt. Auch für das Auslösesignal rel, das von dem Teilnehmer TN2 an das Zielamt ZAT gelangt, gilt das gleiche. Wie auch bei den vorigen Beispielen nur mit Pfeilen in Fig. 2 angedeutet, erfolgt eine Ergänzung dieses Signals durch die geographischen Koordinaten des Teilnehmers und eine Weiterleitung dieses kombinierten Signals rel, gko an die Dienstesteuerung SCP, die schließlich veranlassen kann, daß ein Auslösesignal rel an das Ursprungsamt UAT gelangt. Das Prinzip jeder intelligenten Dienstesteuerung liegt darin, daß sie den gesamten Ablauf und den Verbindungsauf- und -abbau modifizieren kann, wobei dies im Rahmen der Erfindung unter Zuhilfenahme der geographischen Koordinaten der Teilnehmer erfolgt. In Fig. 3 sind weitere Möglichkeiten in diesem Zusammenhang dargestellt, die im folgenden listenartig angeführt werden.

Ein Aufbausignal su eines ersten Teilnehmers wird in dem Ursprungsamt UAT mit geographischen Koordinaten versehen und gelangt als kombiniertes Signal su, gko an die Dienstesteuerung SCP, von dort entsprechend modifiziert zurück und an den ersten Teilnehmer als Aufbauquittierungssignal sua zurück.

Wählinformationen inf des ersten Teilnehmers werden, dies wurde schon früher gezeigt, mit geographischen Koordinaten in dem Ursprungsamt UAT versehen und gelangen dann nach einer Ziffernanalyse in dem Ursprungsamt als erstes Adreßsignal iam zu dem Zielamt ZAT. Weitere Informationen seitens des ersten Teilnehmers gelangen als Signal zinf zu dem Ursprungsamt UAT, werden dort mit geographischen Koordinaten versehen und gelangen als Signal zinf, gko an die Dienstesteuerung SCP, nach Verarbeitung zurück an das Ursprungsamt UAT und von dort als Informationsnachtragssignal sam an das Zielamt ZAT.

Von dem Zielamt ZAT kommt ein Dienstsignal (call progress) cap an das Ursprungsamt UAT, wird dort mit den geographischen Koordinaten des ersten Teilnehmers versehen, sodaß es als Signal cap,gko an die intelligente Dienstesteuerung SCP gelangt und von dort wieder zurück an das Ursprungsamt UAT. Im Ursprungsamt kann dieses Signal weiter verarbeitet werden.

Ein "Adresse komplett"-Signal acm kommt von dem Zielamt ZAT zu dem Ursprungsamt UAT, wird hier mit geographischen Koordinaten versehen, sodaß es als Läute-Koordinatensignal al, gko an die Dienstesteuerung SCP gelangt und von hier nach Verarbeitung an das Ursprungsamt UAT zurück und schließlich als Läutesignal al an den ersten Teilnehmer.

Ein Durchschaltesignal con kommt von dem Zielamt ZAT an das Ursprungsamt UAT, wird hier mit geographischen Koordinaten versehen, sodaß es als kombiniertes Signal con, gko an die Dienstesteuerung SCP gelangt und von hier wieder zurück an das Ursprungsamt UAT, von wo es als Verbindungssignal con an den ersten Teilnehmer abgeht. Nach einem stattfindenden Gespräch kann dann ein Auslösesignal rel von dem ersten Teilnehmer an das Ursprungsamt UAT kommen, hier mit geographischen Koordinaten versehen werden, sodaß es als kombiniertes Signal rel, gko an die Dienstesteuerung SCP gelangt, von hier zurück an das Ursprungsamt UAT und von diesem als Auslösesignal rel an das Zielamt ZAT.

Umgekehrt kann dann ein Auslösesignal rel von dem Zielamt ZAT an das Ursprungsamt UAT gelangen, hier mit geographischen Koordinaten versehen werden, sodaß es als kombiniertes Signal rel, gko an die intelligente Dienstesteuerung SCP gelangt, von wo es nach Bearbeitung an das Ursprungsamt UAT zurückgeht und schließlich als Auslösesignal rel an den ersten Teilnehmer weitergegeben wird.

Unter zusätzlichen Informationen, die in dem oben genannten Signal zinf enthalten sind, können prinzipiell alle Informationen verstanden werden, welche über das reine Wählsignal (Wählziffern) hinausgehen. Beispielsweise kann die intelligente Dienstesteuerung SCP die Funktion übernehmen, wonach beispielsweise bei DECT-Systemen gewisse Nummern von gewissen Zellen aus gewählt oder nicht gewählt werden dürfen. So könnte es möglich sein, daß von gewissen "geographischen" Stellen innerhalb einer Firma bestimmte Auslandsrufnummern angewählt werden können, jedoch nicht, falls sich das DECT-Schnurlostelefon in anderen Zellen, beispielsweise außerhalb des Firmengebäudes, befindet. In diesem Fall erfolgt unter Zuhilfenahme der Erfindung eine Wahlsperre solcher Nummern. Die geographischen Koordinaten treten somit in Wechselwirkung mit der intelligenten Dienstesteuerung, die aus den geographischen Koordinaten verschiedene Folgerungen zieht, die für den weiteren Ablauf verantwortlich sind.

Im Zusammenhang mit beispielsweise dem DECT (= Digital European Cordless Telecommunication)-System sei erwähnt, daß gemäß der Erfindung das Koordinatenregister in einem Amt immer ungeändert bleibt, jedoch eine andere Nummernzuordnung erfolgen kann. Im DECT-System hat das Basisgerät jeder Zelle naturgemäß andere geographische Koordinaten und die Zuordnung der Teilnehmernummern erfolgt über die DECT-Datenbanken.

Das oben erwähnte Dienstsignal (call progress) cap kann beispielsweise eine Meldung sein, daß der Teilnehmer nicht erreicht werden möchte. Diese Nachricht wird dem Ursprungsamt und letzlich der Dienstesteuerung SCP zugeführt und sie steht zusammen mit den geographischen Koordinaten des rufenden Teilnehmers als Information für die Dienstesteuerung zur Verfügung, die weitere Veranlassungen treffen kann.

Ganz allgemein soll die intelligente Dienstesteuerung einen rascheren Ablauf der Vorgänge ermöglichen und das Ursprungsamt kann immer wieder bei jedem eintreffenden Signalisierungsvorgang bei der Dienstesteuerung abfragen, was nun zu geschehen habe. Dies gilt auch dann, wenn die "Adresse komplett"-Nachricht eintrifft, die, wie oben gezeigt, ebenso mit den geographischen Koordinaten verknüpft werden kann. Gleiches gilt auch für die anderen oben dargestellten Signale, sodaß die intelligente Dienstesteuerung SCP die geographischen Koordinaten während des gesamten Gesprächsablaufes vom Verbindungsaufbau bis zum Beenden benutzen kann.

Im Rahmen der Erfindung sind auch sämtliche Kombinationen der oben gezeigten Darstellungen möglich. Insbesondere können die geographischen Koordinaten sowohl des rufenden als auch des gerufenen (ersten, zweiten) Teilnehmers in den Steuerungsprozeß miteinbezogen werden. Eine intelligente Dienstesteuerung SCP kann dem Ursprungsamt UAT oder dem Zielamt ZAT zur Verfügung stehen, doch können ebenso für jedes Amt entsprechende intelligente Dienstesteuerungen vorhanden sein, gleichgültig, ob diese zentral gelegen oder dem Amt unmittelbar zugeordnet sind.

In Fig. 3 unten sind weitere Informationen gezeigt, die von dem Ursprungsamt UAT an das Zielamt ZAT bzw. umgekehrt gelangen können, nämlich kombinierte Signale wie erstes Adreßplus Koordinatensignal iam, gko, Informationsnachtragssignal plus Koordinatensignal sam, gko, Auslösesignal plus Koordinatensignal rel, gko Dienst- plus Koordinatensignal cap, gko, Durchschalte- plus Koordinatensignal con, gko, "Adresse komplett"-plus Koordinatensignal acm, gko und Fehlersignal plus Koordinatensignal fai, gko. Alle diese Signale können, wie in Fig. 2 an Hand weniger Signale dargestellt wurde, in dem Zielamt ZAT gleichfalls mit geographischen Koordinaten versehen und zur Bearbeitung an die dem Zielamt ZAT zugeordnete Dienstesteuerung SCP gesandt werden.

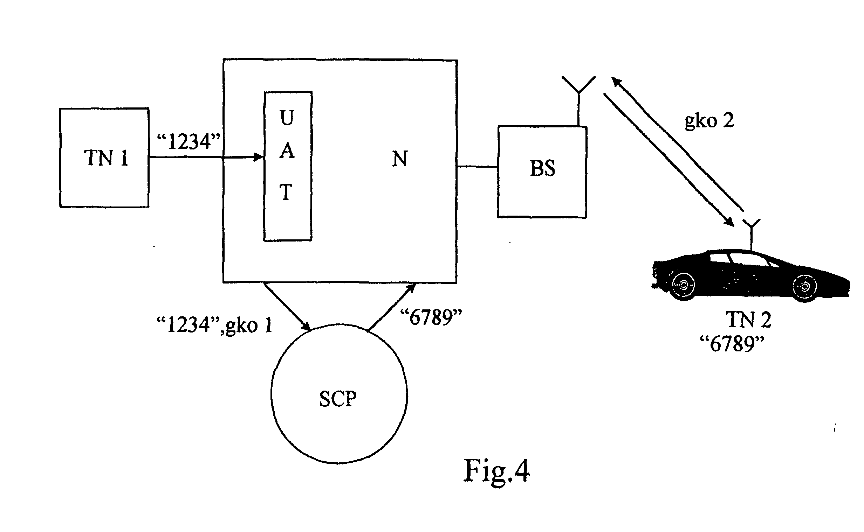

In Fig. 4 ist eines der vielen möglichen praktischen Beispiele im Rahmen der Erfindung illustriert. Ein Teilnehmer TN1, der zu einem Ursprungsamt UAT gehört, wählt eine Nummer "1234", die in dem Ursprungsamt UAT mit geographischen Koordinaten gkol versehen wird. Vom hier bzw. ganz allgemein von dem Netz N gelangt das kombinierte Signal 1234, gokl an eine intelligente Dienstesteuerung SCP.

Es wird davon ausgegangen, daß der Teilnehmer unter der Rufnummer "1234" eine Mietwagenzentrale angerufen hat, um einen Mietwagen zu bestellen. Ein solcher Mietwagen, hier als TN2 eingezeichnet, gibt laufend seine geographischen Koordinaten gko2, die er beispielsweise mit Hilfe eines Satellitennavigationssystems ermittelt, über eine Funkbasisstation BS an das Netz N weiter. Diese geographischen Koordinaten stehen dann auch der intelligenten Dienstesteuerung SCP zur Verfügung, die nun unter den möglichen Mietwagen auf Grund eines Vergleichs in einer abgespeicherten Liste den derzeit nächstgelegensten Mietwagen aussucht, und von sich aus die Rufnummer "6789" dieses Teilnehmers bzw. Mietwagens wählt, sodaß letztlich der Teilnehmer TN1 vollautomatisch mit dem nächstgelegenen Mietwagen verbunden wird.

## Patentansprüche

1. Verfahren zur Vermittlung von Telefonverbindungen von einem Teilnehmer (TN1, TN2), dessen Teilnehmerdaten in einem ihm zugeordneten Amt (UAT, ZAT) abgespeichert werden, wobei abgehende und ankommende Verbindungen durch eine dem Amt zugeordnete Dienstesteuerung (SCP) verwaltet werden können,
**dadurch gekennzeichnet,**
**daß** in einem zusätzlich zu einem Teilnehmer-Datenregister (TND) angeordneten Koordinatenregister (GKR) im jeweiligen Amt(UAT, ZAT) geographische Koordinaten für jeden der vom. Amt bedienten Teilnehmeranschlüsse gespeichert werden,
**daß** die geographischen Koordinaten bei jeder abgehenden und ankommenden Verbindung im Amt (UAT, ZAT) abgerufen und zusammen mit zumindest den Teilnehmerdaten zu der Dienstesteuerung (SCP) übertragen werden, und
**daß** in Abhängigkeit der von der Dienstesteuerung (SCP) empfangenen geographischen Koordinaten der weitere Verbindungsablauf hinsichtlich der Vermittlung der Verbindung gesteuert wird.

2. Verfahren nach Anspruch 1,
**dadurch gekennzeichnet,**
**daß** die geographischen Koordinaten mit geographischen Vergleichskoordinaten verglichen werden, die von der Dienstesteuerung (SCP) in Listen (LIS) abgespeichert werden.

3. Verfahren nach Anspruch 2,
**dadurch gekennzeichnet,**
**daß** in Abhängigkeit von dem Ergebnis des Vergleichs modifizierte Wähldaten von der Dienstesteuerung (SCP) an das Amt (UAT, ZAT) geleitet werden.

4. Verfahren nach einem der vorhergehenden Ansprüche,
**dadurch gekennzeichnet,**
**daß** die Teilnehmer mobile Teilnehmer sind, deren aktuelle geographische Koordinaten der Dienstesteuerung (SCP) zur Verfügung gestellt werden.

5. Verfahren nach einem.der Ansprüche 1 bis 3,
**dadurch gekennzeichnet,**
**daß** die Teilnehmer Benutzer von Schnurlostelefonen in Zellen eines Schnurlossystems sind, deren geographische Koordinaten der Dienstesteuerung (SCP) zur Verfügung gestellt werden.

6. Verfahren nach einem der vorhergehenden Ansprüche,
**dadurch gekennzeichnet,**
**daß** von der Dienstesteuerung (SCP) in Abhängigkeit der geographischen Koordinaten Verbindungen zugelassen oder ausgeschlossen werden.

7. Verfahren nach einem der vorhergehenden Ansprüche,
**dadurch gekennzeichnet,**
**daß** die geographischen Koordinaten an ein Zielamt (ZAT) oder Transitamt (TAT) weitergegeben werden.

8. Verfahren nach einem der vorhergehenden Ansprüche,
**dadurch gekennzeichnet,**
**daß** die geographischen Koordinaten an ein Ursprungsamt (UAT) weitergegeben werden.

9. Verfahren nach einem der vorhergehenden Ansprüche,
**dadurch gekennzeichnet,**
**daß** in Abhängigkeit von den geographischen Koordinaten eine gespeicherte Ansage vor dem Aufbau der Verbindung oder statt dem Herstellen der Verbindung wiedergegeben wird.

10. Verfahren nach einem der Ansprüche 1 bis 8,
**dadurch gekennzeichnet,**
**daß** in Abhängigkeit von den geographischen Koordinaten eine Rufweiterleitung erfolgt.

11. Verfahren nach einem der vorhergehenden Ansprüche,
**dadurch gekennzeichnet,**
**daß** in Abhängigkeit von den geographischen Koordinaten der Teilnehmer mit einem Operator verbunden wird.

12. Telefonnetz zur Vermittlung von Telefonverbindungen von einem Teilnehmer (TN1, TN2), mit einem in einem Amt (UAT, ZAT) angeordneten Teilnehmer-Datenregister (TND) zur Speicherung von Teilnehmerdaten und mit einer dem Amt zugeordneten Dienstesteuerung (SCP) zur Verwaltung von abgehenden und ankommenden Verbindungen,
**dadurch gekennzeichnet,**
**daß** in dem Amt (UAT, ZAT) ein zusätzlich zum Teilnehmer-Datenregister (TND) angeordnetes Koordinatenregister (GKR) zur Speicherung von geographischen Koordinaten für jeden der vom Amt bedienten Teilnehmeranschlüsse vorgesehen ist,
**daß** das Amt (UAT, ZAT) dazu eingerichtet ist, die geographischen Koordinaten bei jeder abgehenden und ankommenden Verbindung abzurufen und zusammen mit zumindest den Teilnehmerdaten zu der Dienstesteuerung (SCP) zu übertragen, und daß die Dienstesteuerung (SCP) dazu eingerichtet ist, in Abhängigkeit der empfangenen geographischen Koordinaten den weiteren Verbindungsablauf hinsichtlich der Vermittlung der Verbindung zu steuern.

13. Telefonnetz nach Anspruch 12,
**dadurch gekennzeichnet,**
**daß** die Dienstesteuerung (SCP) Listen (LIS) mit geographischen Vergleichskoordinaten für einen Vergleich mit den geographischen Koordinaten aufweist.

14. Telefonnetz nach Anspruch 12 oder 13,
**dadurch gekennzeichnet,**
**daß** die Dienstesteuerung (SCP) dazu eingerichtet ist, von mobilen Teilnehmern deren aktuelle geographische Koordinaten zu empfangen.

15. Telefonnetz nach Anspruch 12 oder 13,
**dadurch gekennzeichnet,**
**daß** die Dienstesteuerung (SCP) dazu eingerichtet ist, von Benutzern von Schnurlostelefonen, die sich in Zellen eines Schnurlossystems befinden, deren geographische Koordinaten zu empfangen.

16. Telefonnetz nach einem der Ansprüche 12 bis 15,
**dadurch gekennzeichnet,**
**daß** das Amt als Zielamt (ZAT) oder als Transitamt (TAT) zum Empfang der geographischen Koordinaten ausgebildet ist.

17. Telefonnetz nach einem der Ansprüche 12 bis 15,
**dadurch gekennzeichnet,**
**daß** das Amt als Ursprungsamt (UAT) zum Empfang der geographischen Koordinaten ausgebildet ist.

## Claims

1. Method for the switching of telephone connections from a subscriber (TN1, TN2) whose subscriber data is stored in an exchange (UAT, ZAT) associated with him, in which case outgoing and incoming connections can be managed by a service control point (SCP) associated with the exchange,
**characterized**
**in that** geographical coordinates for each of the subscriber connections which are controlled by the exchange are stored in a coordinate register (GKR), which is arranged there in addition to a subscriber data register (TND), in the respective exchange (UAT, ZAT),
**in that** the geographical coordinates are called up for each outgoing and incoming connection in the exchange (UAT, ZAT), and are transmitted together with at least the subscriber data to the service control point (SCP), and
**in that** the rest of the connection procedure in terms of the switching of the connection is controlled as a function of the geographical coordinates received from the service control point (SCP).

2. Method according to Claim 1,
**characterized**
**in that** the geographical coordinates are compared with geographical comparison coordinates which are stored in lists (LIS) by the service control point (SCP).

3. Method according to Claim 2,
**characterized**
**in that** dialling data which has been modified as a function of the result of the comparison is passed from the service control point (SCP) to the exchange (UAT, ZAT).

4. Method according to one of the preceding claims,
**characterized**
**in that** the subscribers are mobile subscribers, whose current geographical coordinates are made available to the service control point (SCP).

5. Method according to one of Claims 1 to 3,
**characterized**
**in that** the subscribers are users of cordless telephones in cells in a cordless system, whose geographical coordinates are made available to the service control point (SCP).

6. Method according to one of the preceding claims,
**characterized**
**in that** the service control point (SCP) allows or prevents connections as a function of the geographical coordinates.

7. Method according to one of the preceding claims,
**characterized**
**in that** the geographical coordinates are passed to a destination exchange (ZAT) or to a transit exchange (TAT).

8. Method according to one of the preceding claims,
**characterized**
**in that** the geographical coordinates are passed to a source exchange (UAT).

9. Method according to one of the preceding claims,
**characterized**
**in that** a stored announcement is replayed before the connection is set up or instead of setting up the connection, as a function of the geographical coordinates.

10. Method according to one of Claims 1 to 8,
**characterized**
**in that** call forwarding is carried out as a function of the geographical coordinates.

11. Method according to one of the preceding claims,
**characterized**
**in that** the subscriber is connected to an operator as a function of the geographical coordinates.

12. Telephone network for the switching of telephone connections from a subscriber (TN1, TN2), having a subscriber data register (TND) which is arranged in an exchange (UAT, ZAT) for storage of subscriber data, and having a service control point (SCP), which is associated with the exchange, for management of outgoing and incoming connections,
**characterized**
**in that** a coordinate register (GKR), which is arranged in addition to the subscriber data register (TND), is provided in the exchange (UAT, ZAT) for storage of geographical coordinates for each of the subscriber connections which are controlled by the exchange,
**in that** the exchange (UAT, ZAT) is designed to call up the geographical coordinates for each outgoing and incoming connection and to transmit them together with at least the subscriber data to the service control point (SCP),
**and in that** the service control point (SCP) is designed to control the rest of the connection procedure in terms of the switching of the connection as a function of the received geographical coordinates.

13. Telephone network according to Claim 12,
**characterized**
**in that** the service control point (SCP) has lists (LIS) with geographical comparison coordinates for comparison with the geographical coordinates.

14. Telephone network according to Claim 12 or 13,
**characterized**
**in that** the service control point (SCP) is designed to receive their current geographical coordinates from mobile subscribers.

15. Telephone network according to Claim 12 or 13,
**characterized**
**in that** the service control point (SCP) is designed to receive their geographical coordinates from users of cordless telephones who are located in cells in a cordless system.

16. Telephone network according to one of Claims 12 to 15,
**characterized**
**in that** the exchange is in the form of a destination exchange (ZAT) or a transit exchange (TAT) for reception of the geographical coordinates.

17. Telephone network according to one of Claims 12 to 15,
**characterized**
**in that** the exchange is in the form of a source exchange (UAT) for reception of the geographical coordinates.

## Revendications

1. Procédé pour la commutation de liaisons téléphoniques d'un abonné (TN1, TN2) dont les données d'abonné sont mémorisées dans un central (UAT, ZAT) qui lui est associé, des liaisons partant et arrivant pouvant être gérées par un point de contrôle de service (SCP) associé au central,
**caractérisé par le fait que**
dans un registre de coordonnées (GKR) agencé en plus du registre de données d'abonnés (TND) dans le central (UAT, ZAT) respectif, on mémorise des coordonnées géographiques pour chacun des raccordements d'abonné contrôlés par le central,
on appelle les coordonnées géographiques à chaque liaison partant ou arrivant dans le central (UAT, ZAT) et on les transmet conjointement avec au moins les données d'abonnés au point de contrôle de service (SCP), et
en fonction des coordonnées géographiques reçues par le point de contrôle de service (SCP), on commande la suite du déroulement de la liaison pour ce qui est de la commutation de la liaison.

2. Procédé selon la revendication 1,
**caractérisé par le fait qu**'on compare les coordonnées géographiques avec des coordonnées géographiques de comparaison qui sont mémorisées par le point de contrôle de service (SCP) dans des listes (LIS).

3. Procédé selon la revendication 2,
**caractérisé par le fait qu'** on transmet des données de numérotation, modifiées en fonction du résultat de la comparaison, du point de contrôle de service (SCP) au central (UAT, ZAT).

4. Procédé selon l'une des revendications précédentes,
**caractérisé par le fait que** les abonnés sont des abonnés mobiles dont les coordonnées géographiques actuelles sont mises à la disposition du point de contrôle de service (SCP).

5. Procédé selon l'une des revendications 1 à 3,
**caractérisé par le fait que** les abonnés sont des utilisateurs de téléphones sans fil dans des cellules d'un système sans fil, utilisateurs dont les coordonnées géographiques sont mises à la disposition du point de contrôle de service (SCP).

6. Procédé selon l'une des revendications précédentes,
**caractérisé par le fait que** , en fonction des coordonnées géographiques, le point de contrôle de service (SCP) autorise ou rejette des liaisons.

7. Procédé selon l'une des revendications précédentes,
**caractérisé par le fait qu'**on retransmet les coordonnées géographiques à un central d'arrivée (ZAT) ou à un central de transit (TAT).

8. Procédé selon l'une des revendications précédentes,
**caractérisé par le fait qu**'on retransmet les coordonnées géographiques à un central de départ (UAT).

9. Procédé selon l'une des revendications précédentes,
**caractérisé par le fait que**, en fonction des données géographiques, on reproduit une annonce mémorisée avant l'établissement de la liaison ou à la place de l'établissement de la liaison.

10. Procédé selon l'une des revendications 1 à 8,
**caractérisé par le fait qu'**un transfert d'appel s'effectue en fonction des coordonnées géographiques.

11. Procédé selon l'une des revendications précédentes,
**caractérisé par le fait qu'**on relie l'abonné à un opérateur en fonction des coordonnées géographiques.

12. Réseau téléphonique pour la commutation de liaisons téléphoniques d'un abonné (TN1, TN2), avec un registre de données d'abonnés (TND) placé dans un central (UAT, ZAT) pour la mémorisation de données d'abonnés et avec un point de contrôle de service (SCP) associé au central pour la gestion de liaisons partant ou arrivant,
**caractérisé par le fait que**
dans le central (UAT, ZAT), il est prévu un registre de coordonnées (GKR) agencé en plus du registre de données d'abonnés (TND) pour la mémorisation de coordonnées géographiques pour chacun des raccordements d'abonné contrôlés par le central,
le central (UAT, ZAT) est conçu pour appeler les coordonnées géographiques à chaque liaison partant ou arrivant et pour les transmettre conjointement avec au moins les données d'abonnés au point de contrôle de service (SCP),
et le point de contrôle de service (SCP) est conçu pour commander en fonction des coordonnées géographiques reçues la suite du déroulement de la liaison pour ce qui est de la commutation de la liaison.

13. Réseau téléphonique selon la revendication 12,
**caractérisé par le fait que** le point de contrôle de service (SCP) comporte des listes (LIS) avec des coordonnées géographiques de comparaison pour une comparaison avec les coordonnées géographiques.

14. Réseau téléphonique selon la revendication 12 ou 13,
**caractérisé par le fait que** le point de contrôle de service (SCP) est conçu pour recevoir d'abonnés mobiles les coordonnées géographiques actuelles de ceux-ci.

15. Réseau téléphonique selon la revendication 12 ou 13,
**caractérisé par le fait que** le point de contrôle de service (SCP) est conçu pour recevoir d'utilisateurs de téléphones sans fil qui se trouvent dans des cellules d'un système sans fil les coordonnées géographiques de ces utilisateurs.

16. Réseau téléphonique selon l'une des revendications 12 à 15,
**caractérisé par le fait que** le central est conçu comme un central d'arrivée (ZAT) ou comme un central de transit (TAT) pour la réception des coordonnées géographiques.

17. Réseau téléphonique selon l'une des revendications 12 à 15,
**caractérisé par le fait que** le central est conçu comme un central de départ (UAT) pour la réception des coordonnées géographiques.
